(19) Europäisches Patentamt European Patent Office Office européen des brevets

(11) **EP 1 843 021 A2**

(12) **DEMANDE DE BREVET EUROPEEN**

(43) Date de publication:
**10.10.2007 Bulletin 2007/41**

(51) Int Cl.:
*F02B 77/13* (2006.01)       *B60R 13/08* (2006.01)
*G10K 11/172* (2006.01)     *B60R 21/34* (2006.01)

(21) Numéro de dépôt: **07104425.9**

(22) Date de dépôt: **19.03.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **05.04.2006 FR 0651215**

(71) Demandeur: **Peugeot Citroen Automobiles SA 78943 Vélizy-Villacoublay Cedex (FR)**

(72) Inventeurs:
• **Jannier, Régis**
  **75012, PARIS (FR)**
• **Lesquins, Eléonore**
  **92500, RUEIL-MALMAISON (FR)**
• **Sauvage, Olivier**
  **92210, SAINT-CLOUD (FR)**

(74) Mandataire: **Ménès, Catherine**
  **PSA Peugeot Citroen**
  **DRIA/PPIQ/VPI/BLE**
  **18, rue des Fauvelles**
  **F-92256 La Garenne Colombes (FR)**

(54) **Cache moteur pour véhicule automobile**

(57)      L'invention concerne un dispositif d'absorption du bruit généré par un moteur de véhicule automobile qui est un cache de moteur (1) de véhicule automobile. Cache moteur pour véhicule automobile, comportant une coque (2) dont la surface extérieure constitue la surface extérieure (6) du cache moteur et pourvue de cavités résonantes (23), réalisées dans l'épaisseur de la coque, non traversantes, débouchant à la surface (5) de la coque tournée vers le moteur

Cette invention trouve son application dans le domaine de l'automobile.

Fig. 1

EP 1 843 021 A2

## Description

L'invention a pour objet un dispositif pour absorber le bruit généré par un moteur de véhicule automobile.

Parmi un certain nombre d'autres sources de bruit, les injecteurs participent de manière importante au bruit moteur, notamment dans les véhicules à moteur Diesel. En effet, le fonctionnement des injecteurs engendre des vibrations mécaniques à hautes fréquences.

L'absorption du bruit moteur est généralement effectuée par des panneaux couvrant la surface interne du capot moteur. Ces panneaux comprennent une ou plusieurs couches de matériau acoustiquement absorbant tel que du feutre ou de la mousse.

Le pouvoir d'absorption est directement proportionnel à l'épaisseur des panneaux. Cependant, les contraintes résultant des crash-tests, en particulier lors d'un choc piéton, impliquent qu'un espace entre le moteur et le capot soit laissé vide.

En effet, lors du choc piéton, le capot doit se déformer en s'enfonçant vers l'intérieur du compartiment moteur. Cette déformation permet l'absorption d'une partie du choc subi par le piéton. Ainsi, plus l'épaisseur de l'espace est importante, plus le capot peut s'enfoncer dans le compartiment moteur pour ainsi mieux amortir le choc. Or la présence du panneau acoustiquement absorbant diminue d'autant l'épaisseur de cet espace vide.

Tel est également le cas lorsque si le cache moteur est lui-même rendu plus épais par des doublures d'insonorisation, de type matelas de feutre ou de mousse, collées sur la partie de la coque tournée vers le moteur et qui participe à l'absorption des bruits du moteur.

Ainsi, il est connu du brevet EP 1 020 846 une structure absorbante réalisée dans un matériau poreux, comme par exemple une mousse, cette structure étant pourvue d'une série de trous débouchant côté moteur et éventuellement également du côté opposé. La structure est destinée à servir de doublure insonorisant un cache moteur, et est présentée comme plus efficace qu'un simple matelas poreux, de sorte que l'épaisseur totale peut être réduite pour une même efficacité d'insonorisation. A noter que la structure ne peut en aucun cas être utilisée seule.

Le but de l'invention est de proposer un dispositif capable d'absorber efficacement le bruit, généré entre autre par les injecteurs, qui pallie les inconvénients ci-dessus.

Pour atteindre ce but, l'invention propose un cache moteur d'un véhicule automobile, comportant une coque dont la surface extérieure constitue la surface extérieure du cache moteur et pourvue de cavités résonantes, réalisées dans l'épaisseur de la coque, non traversantes, débouchant à la surface de la coque tournée vers le moteur.

La présence des cavités dans la surface inférieure du cache moteur permet l'absorption du bruit généré, notamment aux fréquences des vibrations mécaniques engendrées par les injecteurs du moteur. Sachant que ces dernières sont typiquement de l'ordre de 3000 à 7000Hz, cette absorption est réalisée avec des cavités dont la plus grande largeur est de l'ordre de 1 à 10mm, réalisées par exemple au moment de moulage de la coque, en général avec une matière plastique telle un polyamide, pour former une coque rigide, non poreuse, et capable d'être mise en oeuvre par exemple par des procédés de type moulage par injection.

Lorsque les cavités débouchent par un col plus étroit que la cavité elle-même, notamment, lorsque les cavités résonantes admettent une grande largeur D plus grande que la section S de la cavité au niveau où elle débouche à la surface tournée vers le moteur, il peut être plus simple de former une coque en deux étapes, en utilisant une plaque de finition qui vient recouvrir la face du cache tournée vers le moteur, cette plaque comportant des perforations qui vont former les cols des cavités résonnantes. Cette plaque pourra être constituée dans le même matériau que la coque, ou éventuellement dans un autre matériau, sachant que les contraintes de tenue thermique et mécanique notamment ne sont pas strictement identiques pour la partie principale de la coque et la plaque de finition (qui peut éventuellement agir comme plaque de renforcement).

Selon une autre caractéristique de l'invention, le cache moteur comprend au moins une cavité incluant un évidement principal et au moins un évidement secondaire débouchant dans une paroi de l'évidement principal, cet évidement secondaire ayant des dimensions inférieures à celles de l'évidement principal.

Selon une autre caractéristique de l'invention, la cavité peut comprendre un évidement tertiaire débouchant dans une paroi de l'évidement secondaire, cet évidement tertiaire ayant des dimensions inférieures à celles de l'évidement secondaire.

Selon une autre caractéristique de l'invention, le cache moteur comprend un évidement délimité par un fond circulaire et une paroi latérale cylindrique.

Selon une autre caractéristique de l'invention, le cache moteur peut comprendre une partie inférieure et une partie supérieure, la partie inférieure comportant des perforations formant entrées de cavités et la partie supérieure comprenant les cavités résonantes.

Selon une autre caractéristique de l'invention, le cache moteur comprend une cavité résonnante faisant partie d'un élément qui est rapporté à la surface inférieure du cache de moteur.

Selon une autre caractéristique de l'invention, le cache de moteur peut comprendre un capuchon en matériau acoustiquement absorbant emboîté dans au moins un évidement formant la cavité.

D'autres caractéristiques et avantages de la présente invention ressortiront de la description ci-après faite en référence aux figures. Dans ces figures :

la figure 1 est une vue en perspective d'un cache moteur comprenant des cavités résonantes selon l'invention ;

la figure 2 est une vue schématique d'un exemple de cavité qui est un résonateur dit résonateur d'Helmholtz ;

la figure 3 est une vue en coupe du cache moteur selon l'invention pourvu de cavités résonantes de type quart d'onde dans son épaisseur ;

la figure 4 est une autre vue en coupe du cache moteur selon l'invention comprenant une cavité délimitée par un évidement principal de type quart d'onde et au moins un évidement secondaire de type quart d'onde ;

la figure 5 est une autre vue en coupe du cache moteur selon l'invention comprenant une cavité délimitée par un évidement principal, au moins un évidement secondaire et au moins un évidement tertiaire ;

la figure 6 est une vue en coupe montrant un cache moteur selon l'invention comprenant une partie inférieure et une partie supérieure ;

la figure 7 est une vue en coupe du cache moteur selon l'invention comprenant une cavité pourvue d'un capuchon en matériau absorbant acoustique.

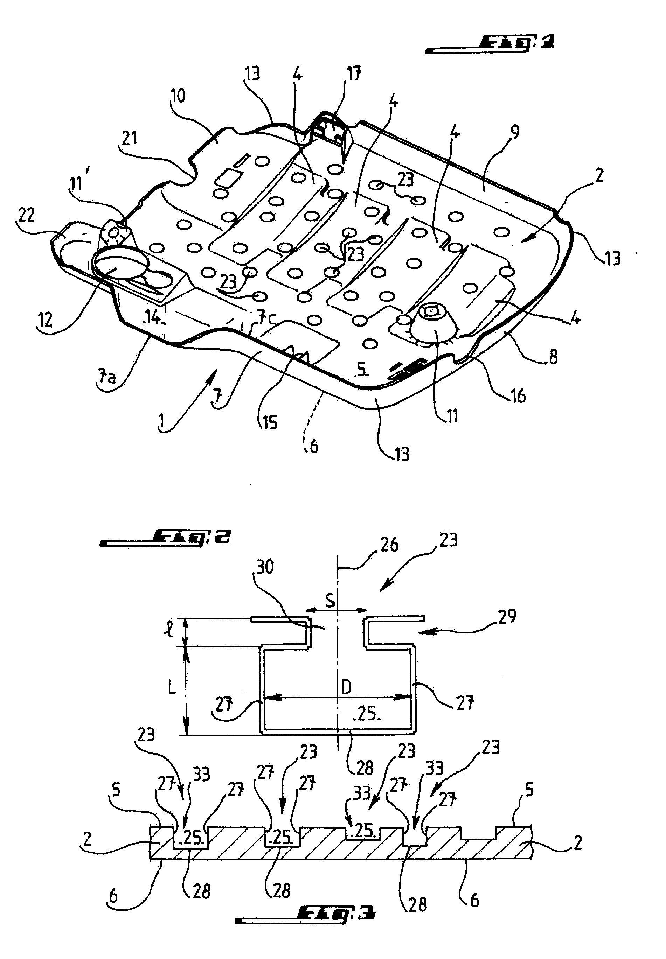

La figure 1 représente un exemple de cache moteur 1 destiné à obturer un moteur d'un véhicule automobile non représenté.

Le cache moteur 1 est essentiellement constituée par une coque 2 de forme générale rectangulaire, délimitée par une surface 5 située en regard du moteur et une surface opposée 6 continue, et constituant la face visible du cache moteur.

La coque 2 comporte dans l'exemple présenté des ondulations formant des reliefs 4 raidissant le cache moteur 1.

De façon connue, la coque peut comporter des éléments en saillie, tels l'élément 11 disposé à proximité d'un bord 8 et l'élément 11' à proximité d'un autre bord 10 opposé au bord 8. La coque 2 comporte aussi un orifice 12 à proximité d'une jonction 13 entre deux bords adjacents 7 et 10. L'orifice 12 est prévu pour le passage d'éléments tels que tuyaux ou conduites à travers le cache moteur 1. Les bords 7, 8, et 10 ainsi qu'un bord 9 définissent conjointement un bord périphérique délimitant le contour de la coque 2.

Le bord 7 comprend une portion 14 évasée. Un élément de fixation 15 supplémentaire est disposé au niveau de la face intérieure 7c de ce bord 15. Le bord 8 comporte une encoche 16 arrondie à proximité de l'élément 11. Le bord 9 comporte deux encoches 18 et 19 chacune à une extrémité de ce bord. A proximité du bord 9 est disposé un élément de fixation 17. Le bord 10 comporte une encoche 21 arrondie.

Tous ces éléments prévus sur les bords 7 à 10, la surface inférieure 5 et la paroi 2 coopèrent avec d'autres éléments non représentés pour solidariser le cache moteur 1 avec le moteur.

Selon l'invention, la surface inférieure 5 du cache moteur 1 comporte des cavités résonantes 23 débouchant selon une direction opposée à la surface supérieure 6.

Dans l'exemple des figures, les cavités résonantes 23 sont disposées dans l'épaisseur de la coque 2 et suivant un maillage prédéterminé, permettant de couvrir au moins en partie la surface inférieure 5.

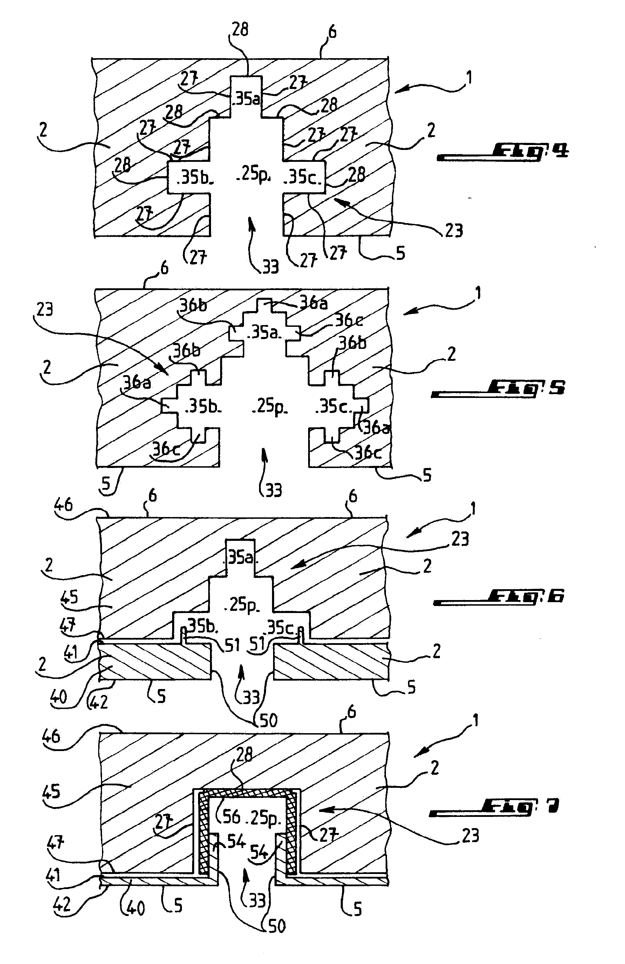

Chaque cavité résonante 23 peut être un résonateur d'Helmholtz, tel que celui représenté en figure 2, qui comporte une cavité sous forme d'un évidement 25 cylindrique, d'axe de symétrie 26 et définissant un volume interne V.

Cet évidement cylindrique 25 est délimité par une paroi latérale 27 et un fond 28 circulaire, et il est terminé par un col 29 définissant une ouverture 30 étroite et longue. Ce col relie la cavité 23 à l'extérieur en définissant une entrée 33.

Ce col 29 est tubulaire de longueur l et de section S, ces dimensions étant très inférieures aux dimensions générales de l'évidement 25.

Le résonateur d'Helmholtz permet d'atténuer le niveau sonore généré à une fréquence sonore donnée, cette fréquence étant déterminée classiquement au premier ordre par la relation :

$$f_0 = \frac{c}{2\pi} \sqrt{\frac{S}{Vl}} \, ,$$

dans laquelle c désigne la célérité du son dans l'air.

Comme le montre cette relation, le dimensionnement dépend principalement de la géométrie du résonateur, à savoir le volume V de l'évidement 25, la longueur l et la section S du col 29.

Les cavités résonantes 23 du cache moteur selon l'invention peuvent aussi être des résonateurs de Helmholtz sans col ou des résonateurs de type tube quart-d'onde. Le résonateur d'Helmholtz sans col comprend seulement un évidement cylindrique 25 délimité par la paroi latérale 27 et le fond circulaire 28. Le résonateur de type tube quart-d'onde comprend un évidement cylindrique qui est ouvert à l'une de ses faces et fermé à son autre face.

Les dimensions de ces résonateurs de Helmholtz sans col ou tube quart- d'onde sont principalement la longueur du cylindre, ou de l'évidement, L et son diamètre D. La longueur L conditionne la fréquence du signal sonore à absorber, cette longueur L étant d'autant plus petite que la fréquence atténuée est élevée. Le diamètre D conditionne le pouvoir d'absorption, ce diamètre étant d'autant plus grand que le pouvoir d'absorption est élevé.

Dans la pratique, la fréquence et l'intensité du signal sonore à absorber sont déterminées aux termes d'essais qualifiant le bruit émis par le moteur. Les résonateurs sont ensuite dimensionnés pour atténuer le signal sonore à la fréquence en question.

Les cavités 23 de faibles dimensions qui sont réalisées dans l'épaisseur du cache moteur 1 selon l'invention sont particulièrement adaptées à l'absorption des signaux sonores générés par les injecteurs, qui émergent dans le spectre du bruit généré par le moteur.

Ces signaux sonores sont émis à de hautes fréquences et peuvent de ce fait être absorbés efficacement par des résonateurs de faibles dimensions intégrés dans l'épaisseur du cache.

Sur la figure 3, une cavité 23 est réalisée dans l'épaisseur de la coque 2 en s'ouvrant dans la surface inférieure 5. Elle débouche selon la direction opposée à la surface supérieure 6, pour que son entrée 33 se trouve en regard du moteur.

La figure 3 montre plusieurs cavités résonantes 23 disposées en un maillage prédéterminé, ce qui permet d'augmenter le pouvoir d'absorption du cache moteur 1.

Comme visible sur la figure 3, les cavités 23 ont des dimensions différentes les unes des autres, pour atténuer le bruit sur une plage de fréquences relativement large.

Dans le mode de réalisation présenté figure 3, les cavités résonantes sont de type quart d'onde. Une première variante de la cavité résonante 23 est représentée sur la figure 4. Elle comprend un évidement principal 25p et des évidements secondaires 35a, 35b, 35c débouchant dans cet évidement principal 25p.

Chaque évidement secondaire 35a, 35b, 35c est délimité par une paroi latérale cylindrique et un fond circulaire.

Au moins deux des évidements secondaires 35b et 35c débouchent dans la paroi latérale 27 de l'évidement principal 25p. Un autre évidement secondaire 35a débouche dans le fond circulaire 28 de l'évidement principal 25p. Chaque évidemment secondaire peut être vu comme une nouvelle cavité résonante de type quart d'onde.

La cavité résonante 23 ainsi formée a son entrée 33 se trouvant au niveau de l'évidement principal 25p, reliant la cavité 23 à l'extérieur, et son fond correspondant au fond de l'évidement secondaire 35a.

Les cavités secondaires 35a à 35c améliorent le pouvoir d'absorption, et permettent l'absorption de signaux sonores de fréquences plus basses que celle absorbée par l'évidement principal 25p.

Une deuxième variante de la cavité résonante 23 est représentée sur la figure 5. Elle comprend, des évidements tertiaires 36a, 36b, 36c en plus de l'évidement principal 25p et des évidements secondaires 35a, 35b, 35c.

Chaque évidement tertiaire 36a, 36b, 36c est délimité par une paroi latérale cylindrique et un fond circulaire.

Au moins deux de ces évidements tertiaires 36b et 36c débouchent dans la paroi latérale 27 de chaque évidement secondaire 35a, 35b ou 35c. Un autre évidement tertiaire 36a débouche dans le fond circulaire 28 de chaque évidement secondaire.

De la même façon que dans la première variante, l'entrée 33 de la cavité résonante 23 se trouve au niveau de l'évidement principal 25p, et son fond correspond au fond de l'évidement tertiaire 36a.

Les cavités tertiaires 36a à 36c améliorent encore le pouvoir d'absorption, et permettent l'absorption de signaux sonores de fréquences plus basses que celle atténuée par l'évidement principal 25p et les évidements secondaires 35a à 35c.

D'autres variantes basées sur le même principe de généralisation sont bien entendu possibles.

Des variantes des modes de réalisation présentés figures 4, 5 et 6 sont également possibles, notamment en variant les dimensions des cavités secondaires et tertiaires.

Les cavités résonantes 23 peuvent être obtenues directement lors du moulage par injection du cache moteur 1.

Dans l'exemple de la figure 6, le cache moteur 1 est physiquement divisé en une partie inférieure 40 et une partie supérieure 45, la partie inférieure 40 étant de faible épaisseur par rapport à la partie supérieure 45.

La partie inférieure 40 est située en regard du moteur et est délimitée par une face interne 41, en regard de la partie supérieure 45, et une face externe 42 en regard du moteur.

Cette partie inférieure 40 comprend des perforations 50 cylindriques formant chacune l'entrée 33 de chaque cavité résonante 23.

Chaque perforation 50 a un axe de symétrie confondu avec l'axe 26 de la cavité résonante 23.

Une bordure 51, de faibles dimensions, est prévue du côté de la face interne 41 de la partie inférieure 40 et dépasse en direction de la surface supérieure 6 du cache moteur 1.

Ces bordures sont des éléments de fixation de la partie inférieure 40 à la partie supérieure 45. Chaque bordure s'emboîte dans un évidement correspondant de la partie supérieure.

La partie supérieure 45 comprend l'ensemble des cavités résonantes 23. Elle est délimitée par une face interne 47, faisant face à la partie inférieure 40 du cache moteur 1, et une face externe 46 qui est confondue avec la surface supérieure 6 du cache moteur 1.

Dans l'exemple de la figure 6, les évidements secondaires 35b et 35c sont situés dans la partie supérieure 45 tout en étant fermée par la partie inférieure 40.

La partie inférieure 40 du cache coopère avec la partie supérieure 45, en épousant les formes de cette dernière, et grâce aux bordures 51, afin de former un cache moteur 1 ayant l'apparence d'une seule pièce.

Dans une autre variante représentée sur la figure 7, la cavité résonante 23 comprend un seul évidement principal 25p délimité par la paroi latérale 27 et le fond circulaire 28.

Mais le cache moteur 1 est divisé en une partie inférieure 40 comprenant les perforations 50 et une partie supérieure 45 comprenant l'ensemble des cavités résonantes 23.

Comme visible sur la figure 7, la partie inférieure 40 du cache épouse les formes de la partie supérieure 45.

Cette partie inférieure 40 comprend au moins une bordure 54 cylindrique se prolongeant dans la partie supérieure 45.

Ces montants 54 sont aptes à maintenir en place un capuchon 56 en matériau absorbant acoustique.

Ce capuchon 56 est emboîté dans l'évidement principal 25p d'une cavité résonante 23, dont il permet de modifier le pouvoir d'absorption, suivant les caractéristiques propres du matériau acoustique utilisé, cela sans changer la géométrie des cavités résonantes.

Une autre variante, non représentée ici, consiste à pourvoir le cache moteur 1 d'au moins un élément rapporté à la surface inférieure 5, cet élément comprenant au moins une cavité résonante 23, telle que définie ci-dessus.

L'évidement 25 n'est pas limité à une forme cylindrique, il peut être d'une forme parallélépipédique ou autre.

Les cavités 23 de la surface inférieure 5 du cache moteur 1 permettent l'absorption du signal sonore moteur généré, entre autres, par les injecteurs.

En particulier, l'intégration de ces cavités 23 dans le cache moteur 1 lui-même permet d'avoir un dispositif d'absorption de bruit peu encombrant libérant ainsi de l'espace dans le compartiment moteur, cet espace étant utile lors d'un choc piéton pour permettre au capot moteur de se déformer en absorbant ce choc, selon les normes relatives au choc piéton.

De plus, le cache moteur est à proximité directe des injecteurs, donc proche de la source sonore à absorber, de sorte que son efficacité est encore accrue.

Le pouvoir d'absorption des cavités résonantes 23 est amélioré grâce à l'utilisation de plusieurs cavités arrangées en maillage.

Il est encore accru par la mise en oeuvre des évidements secondaires en plus de l'évidement principal dans la cavité, et des évidements tertiaires.

De plus, la mise en oeuvre de plusieurs cavités permet d'avoir des cavités de différentes dimensions pour obtenir une plage de fréquences efficaces plus large.

**Revendications**

1. Cache moteur pour véhicule automobile, comportant une coque (2) dont la surface extérieure constitue la surface extérieure (6) du cache moteur et pourvue de cavités résonantes (23), réalisées dans l'épaisseur de la coque, non traversantes, débouchant à la surface (5) de la coque tournée vers le moteur.

2. Cache moteur selon la revendication 1 **caractérisé en ce que** les cavités résonantes (23) admettent une grande largeur D plus grande que la section S de la cavité au niveau où elle débouche à la surface (5).

3. Cache moteur selon la revendication 1 ou la revendication 2, comprenant au moins une cavité (23) incluant un évidement principal (25p) et au moins un évidement secondaire (35a, 35b, 35c) débouchant dans une paroi (27) de l'évidement principal (25p), cet évidement secondaire ayant des dimensions inférieures à celles de l'évidement principal (25p).

4. Cache moteur selon la revendication 3, comprenant en outre un évidement tertiaire (36a, 36b, 36c) débouchant dans une paroi (27) de l'évidement secondaire (35a, 35b, 35c), cet évidement tertiaire ayant des dimensions inférieures à celles de l'évidement secondaire.

5. Cache moteur selon la revendication 1, **caractérisé en ce que** les cavités (23) sont délimitées par un fond circulaire (28) et une paroi latérale cylindrique (27).

6. Cache moteur selon l'une quelconque des revendications précédentes, **caractérisée en ce que** la coque est constituée d'une première partie (45) comportant des évidements (25) et d'une plaque munie de perforations (50) formant entrant des cavités (23 ; 33).

7. Cache moteur selon l'une quelconque des revendications précédentes dont au moins une des cavités résonantes est munie d'un capuchon (56) en matériau acoustiquement absorbant emboîté dans au moins un évidement (25) formant la cavité (23).

8. Cache moteur selon l'une quelconque des revendications précédentes comprenant au moins un évidement (25) de la cavité résonnante (23) sous forme d'un résonateur d'Helmholtz dépourvu de col ou sous forme d'un résonateur de type tube quart-d'onde ouvert-fermé.

9. Cache moteur selon l'une quelconque des revendications précédentes, **caractérisé en ce que** les cavités ont une grande largeur comprise entre 1 et 10 mm.

10. Cache moteur selon l'une quelconque des revendications précédentes, **caractérisé en ce que** la coque est en matière plastique rigide.

Fig. 1

Fig. 2

Fig. 3

Fig. 4

Fig. 5

Fig. 6

Fig. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1020846 A